# EUROPEAN PATENT APPLICATION

(11) **EP 2 939 755 A1**
(43) Date of publication of application: **04.11.2015**
(21) Application number: 13867052.6
(22) Date of filing: 19.11.2013
(51) Int. Cl.: B21D 28/36, B21D 19/00, B23K 26/38, B23K 26/60, B23K 26/70

(54) **DEBURRING TOOL FOR LASER BEAM MACHINE AND DEBURRING METHOD THEREFOR**

(30) Priority: 27.12.2012 JP 2012284869
(71) Applicant: Murata Machinery, Ltd., Kyoto-shi, Kyoto 601-8326 (JP)
(72) Inventor: TSUKADA, Shinichi, Inuyama-shi Aichi 484-8502 (JP)
(74) Representative: Stöckeler, Ferdinand
(86) International application number: PCT/JP2013/081120
(87) International publication number: WO 2014/103561

(57) **Abstract**

The deburring tool (20) includes: upper and lower ball holding members (42, 52) disposed so as to oppose each other; upper and lower balls (43, 53) that are rotatably supported by the respective upper and lower ball holding members (42 52) and that project so as to confront opposing surfaces of the respective lower and upper ball holding members (52, 42). In a state where a thermally cut portion (A) of the sheet material (W) is held between the upper and lower balls (43, 53), by moving the sheet material (W) along the thermally cut portion (A) by a sheet material moving mechanism, a lower surface edge portion (C) along the thermally cut portion (A) of the sheet material (W) is pressed upward by the lower ball (53).

## Description

### CROSS REFERENCE TO THE RELATED APPLICATION

This application is based on and claims Convention priority to Japanese patent application No. 2012-284869, filed December 27, 2012, the entire disclosure of which is herein incorporated by reference as a part of this application.

### BACKGROUND OF THE INVENTION

### (Field of the Invention)

The present invention relates to deburring tools that press surfaces of edge portions of thermally cut portions of sheet materials that have been thermally cut by laser processing machines to obtain smooth finish, and a deburring method therefor.

### (Description of Related Art)

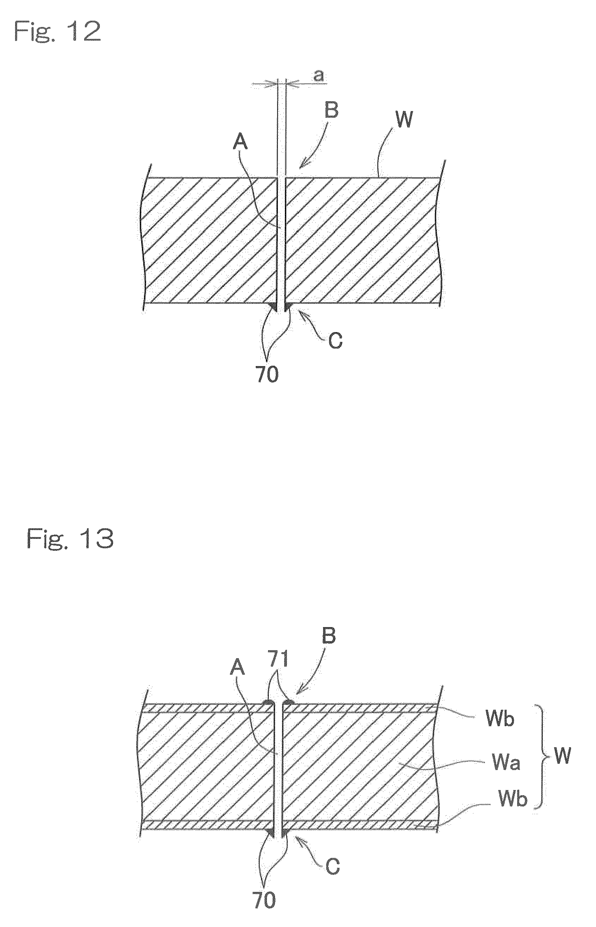

When a sheet material made of steel is thermally cut by a laser processing machine, slag or the like generated in the processing is solidified to generate a burr-like protrusion 70 in a surface edge portion, in particular, in a lower surface edge portion C along a thermally cut portion A of a sheet material W, as shown in Fig. 12. Since molten metal is blown off from the upper side by inert gas during the thermal cutting process, the slag or the like tends to be accumulated on the lower side. Therefore, the protrusion 70 is generated in the lower surface edge portion C.

Further, as shown in Fig. 13, in the case that the sheet material W is a plated steel sheet, such as a zinc-plated steel sheet, in which a surface of a steel Wa is plated with a metal Wb having a melting point lower than the steel Wa, a small projection 71 may be partially generated also in an upper surface edge portion B. The projection 71 is formed mainly by the metal Wb being molten during a thermal cutting process and the being blown off or scattered. Conventionally the protrusion 70 and the projection 71 which are thus generated during the thermal cutting process are manually removed by using a sander in a later process. In Fig. 12 and Fig. 13, the protrusion 70 and the projection 71 are enlarged in exaggerated manners.

For removing burr generated in a sheet material during a punching process with the use of a punch press, a deburring tool mounted on a tool supporter of the punch press has been known (for example, Patent Document 1).

### [Prior Art Document]

### [Patent Document]

[Patent Document 1] Japanese Patent No. 4916104

In a case where the protrusion 70 and the projection 71 which are generated during a thermal cutting process with the use of a laser processing machine are manually removed by using a sander, such an operation requires much time and work, which may increase production cost.

### SUMMARY OF THE INVENTION

An object of the present invention is to provide: a deburring tool capable of efficiently removing burr-like protrusions which are generated in a lower surface edge portion along a thermally cut portion of a sheet material in a thermal cutting process using a laser processing machine, with the use of a sheet material moving mechanism mounted on the laser processing machine; a laser processing machine including the deburring tool; and a deburring method for performing surface pressing process using the deburring tool.

A deburring tool, of a laser processing machine, according to the present invention is used for a laser processing machine that includes: a laser head configured to irradiate a sheet material with a laser beam downward; and a sheet material moving mechanism configured to move, below the laser head, the sheet material in a front, rear, left, and right directions relative to the laser head, thereby to perform thermal cutting process for the sheet material by irradiating the sheet material, moved by the sheet material moving mechanism, with the laser beam. The deburring tool includes: upper and lower ball holding members disposed so as to oppose each other; and upper and lower balls rotatably supported by the respective upper and lower ball holding members, the upper and lower balls projecting so as to confront opposing surfaces of the respective lower and upper ball holding members. In a state where a thermally cut portion of the sheet material is held between the upper ball and the lower ball, the sheet material is moved along the thermally cut portion by the sheet material moving mechanism, and a lower surface edge portion along the thermally cut portion of the sheet material is pressed upward by the lower ball.

The thermally cut portion represents a slit-like portion or interspace obtained by a metal material being removed by thermal cutting process. In a case where portions, on both sides, separated by the thermally cut portion are, for example, a material portion and a product portion that are separated from each other, the thermally cut portion is not in a slit-like shape but is a virtual space between the end surface of the sheet material (product portion) and a virtual plane that is distant from the end surface by a width of the slit-like portion.

According to the deburring tool having this configuration, by moving the sheet material while the sheet material is held between the upper and lower balls, a burr-like protrusion generated in the lower surface edge portion along the thermally cut portion of the sheet material is squashed and removed by the surface pressing or deburring press with the use of the lower ball. The "removed" described herein indicates that a portion, of the burr-like protrusion, protruding from the lower surface of the sheet material is at least reduced or eliminated by the squashing operation. Since the upper and lower balls are rotatably supported by the respective upper and lower ball holding members and freely rotate in any direction by the sheet material being moved, the sheet material can be smoothly moved. Accordingly, the surface pressing process for the removal of the burr-like protrusion can be sequentially performed with high efficiency.

In the deburring tool according to the present invention, in a state where the sheet material is held between the upper ball and the lower ball, the sheet material may be moved by the sheet material moving mechanism, and an upper surface edge portion along the thermally cut portion of the sheet material is pressed downward by the upper ball. In this case, the surface pressing process for removal can be sequentially performed with high efficiency for the projection generated in the upper surface edge portion, in addition to the burr-like protrusion generated in the lower surface edge portion along the thermally cut portion of the sheet material. The removal for the projection also indicates that a portion, of the projection, projecting from the upper surface of the sheet material is at least reduced or eliminated by the squashing operation.

The laser processing machine according to the present invention includes the deburring tool described above. Therefore, the surface pressing process for removal can be sequentially performed with high efficiency for the burr-like protrusion generated in the lower surface edge portion along the thermally cut portion of the sheet material.

A deburring method, for use in a thermally cut portion of a sheet material, according to the present invention performs, by using the deburring tool described above, dedurring press process for a thermally cut portion of a sheet material that is a plated steel sheet in which a surface of a steel is plated with a metal having a melting point lower than the steel. In a state where the thermally cut portion of the sheet material is held between the upper ball and the lower ball, by moving the sheet material along the thermally cut portion by the sheet material moving mechanism, a lower surface edge portion along the thermally cut portion of the sheet material is pressed upward by the lower ball, and an upper surface edge portion along the thermally cut portion of the sheet material is pressed downward by the upper ball.

According to the deburring method described above, by moving the sheet material while the sheet material is held between the upper and lower balls, a burr-like protrusion generated in the lower surface edge portion along the thermally cut portion of the sheet material is squashed and removed by the surface pressing using the lower ball. Further, a projection generated in the upper surface edge portion is squashed and removed by the surface pressing using the upper ball. Although, in a plated steel sheet, a projection tends to be generated in the upper surface edge portion as described above, the projection can be removed by means of this deburring method. Since the upper and lower balls are rotatably supported by the respective upper and lower ball holding members and freely rotate in any direction by the sheet material being moved, the sheet material can be smoothly moved. Accordingly, the surface pressing process for the removal of the burr-like protrusion and the projection can be sequentially performed with high efficiency.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a plan view of a schematic configuration of a laser processing machine including a deburring tool according to a preferred embodiment of the present invention;
Fig. 2 is a side view of a schematic configuration of the laser processing machine;
Fig. 3 is a longitudinal cross-sectional view illustrating a state where the deburring tool is installed in the laser processing machine;
Fig. 4A is a perspective view of an upper die of the deburring tool;
Fig. 4B is a perspective view of an upper member of a lower die body in a lower die of the deburring tool;
Fig. 5A is a plan view of a schematic configuration of lower die ascending and descending unit to ascend and descend the lower die of the deburring tool;
Fig. 5B is a front view of a schematic configuration of the lower die ascending and descending unit;
Fig. 6 is a cross-sectional view illustrating a state where the lower die of the deburring tool is descended by the lower die ascending and descending unit;
Fig. 7A is a plan view of a sheet material having sheet material portions on both sides lateral to a thermally cut portion;
Fig. 7B is a plan view of a sheet material having a sheet material portion on only one side lateral to a thermally cut portion;
Fig. 8 is a plan view illustrating a surface pressing process operation by the deburring tool;
Fig. 9 is a cross-sectional view illustrating an example of the surface pressing process operation by the deburring tool;
Fig. 10 is a cross-sectional view illustrating another example of the surface pressing process operation by the deburring tool;
Fig. 11 is a cross-sectional view illustrating a further different example of the surface pressing process operation by the deburring tool;
Fig. 12 illustrates a cross-sectional shape of a peripheral portion of a thermally cut portion in a sheet material made of steel; and
Fig. 13 illustrates a cross-sectional shape of a peripheral portion of a thermally cut portion in a sheet material that is a plated steel sheet.

### DESCRIPTION OF EMBODIMENTS

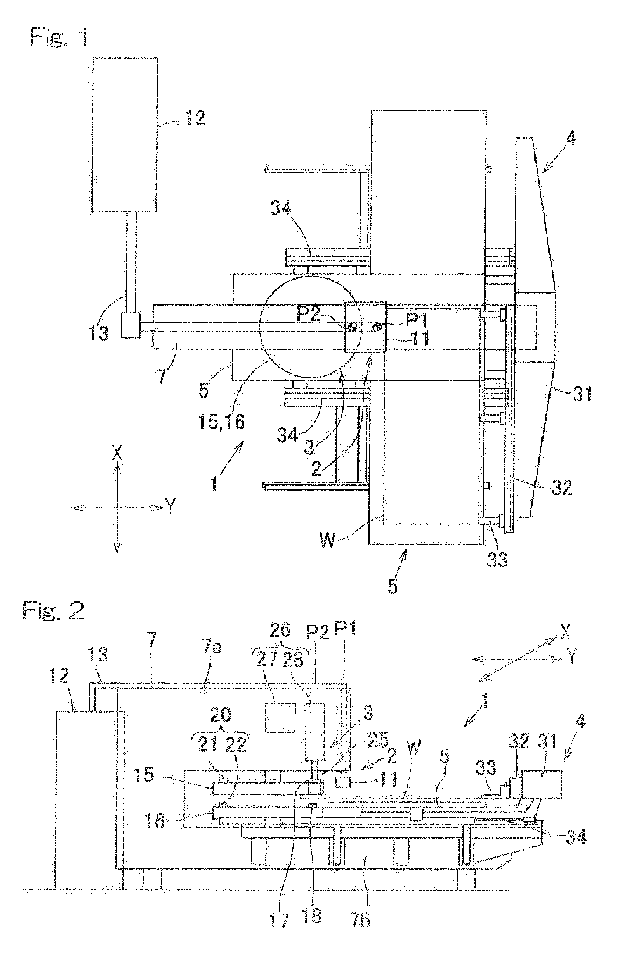

A preferred embodiment of the present invention will be described with reference to the drawings. Fig. 1 is a plan view of a schematic configuration of a laser processing machine including a deburring tool according to the preferred embodiment, and Fig. 2 is a side view thereof. The laser processing machine 1 is configured as a laser punch combination machine having a laser processing machine portion 2 and a punch press mechanism portion 3 combined with each other. A plate material or sheet material W is thermally cut at a laser processing position P1 by the laser processing machine portion 2, and the sheet material W is punched at a punching position P2 by the punch press mechanism portion 3. The laser processing position P1 and the punching position P2 are fixed positions. The sheet material W is moved by a sheet material moving mechanism 4 such that a portion, to be processed, of the sheet material W supported by a sheet material table 5 conforms with the laser processing position P1 or the punching process position P2.

The laser processing machine portion 2 is disposed at the laser processing position P1 positioned at the front end of an upper frame portion 7a of a frame 7 having a C-shaped side surface, and includes: a laser head 11 configured to irradiate the sheet material W with a laser beam downward; a laser oscillator 12 disposed on a floor surface distant from the frame 7; and a transmission path 13 through which laser beam is guided from the laser oscillator 12 to the laser head 11. For the transmission path 13, for example, an optical fiber for transmission is used.

The punch press mechanism portion 3 includes disk-shaped upper and lower turrets 15 and 16 that serve as a tool supporter, and those upper and lower turrets 15 and 16 are supported by the upper frame portion 7a and a lower frame portion 7b of the frame 7, respectively, so as to be concentric with each other and rotatable about the vertical axis. In the upper and lower turrets 15 and 16, a plurality of upper dies 17 and lower dies 18 for forming process, and an upper die 21 and a lower die 22 for deburring press or surface pressing are aligned in the circumferential direction. The upper die 21 and the lower die 22 for surface pressing may be provided at only one portion in the circumferential direction, or plural kinds of the upper and lower dies for surface pressing may be provided at a plurality of portions in the circumferential direction. A deburring tool 20 is formed by the paired upper die 21 and lower die 22 for surface pressing.

The upper and lower turrets 15 and 16 are indexed by die indexing unit (not shown) mounted in the frame 7 such that desired dies are positioned to the punching position P2. In a state where the upper die 17 and lower die 18 for forming process, or the upper die 21 and the lower die 22 for surface pressing have been indexed to the punching position P2 by the die indexing unit, the upper die 17, 21 is driven by a ram 25 so as to ascend and descend. The ram 25 is supported by the upper frame portion 7a of the frame 7 so as to be ascendable and descendable via a guide member (not shown), and is driven by a punch driving mechanism 26 so as to ascend and descend. The punch driving mechanism 26 includes, for example, a servomotor 27 and a movement transforming mechanism 28 for transforming rotation of the motor into linear movement.

The sheet material moving mechanism 4 includes a carriage 31 that moves in the front-rear direction (Y direction), a cross slide 32 that moves in the left-right direction (X direction) mounted on the carriage 31 and a workpiece holder 33 that is mounted on the cross slide 32 and holds the end portion of the sheet material W. A guide rail 34 is disposed below the carriage 31 so as to extend in the front-rear direction. The carriage 31 is moved along the guide rail 34 by a not-illustrated driving source for front-rear movement. Further, the cross slide 32 is moved in the left-right direction relative to the carriage 31 by a not-illustrated driving source for left-right movement.

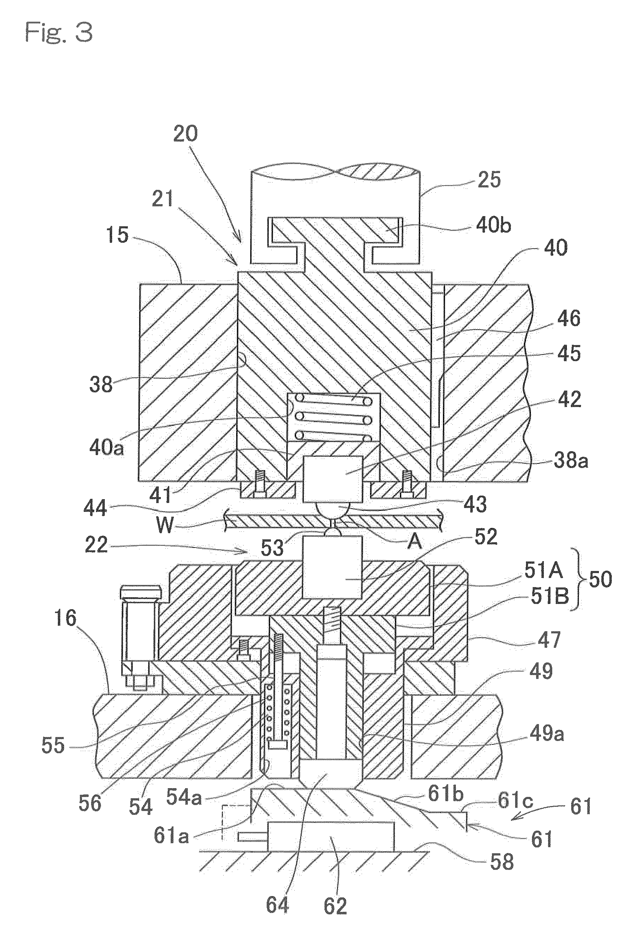

Fig. 3 is a longitudinal cross-sectional view of the upper die 21 and the lower die 22 of the deburring tool 20 mounted to the respective upper and lower turrets 15 and 16. The upper die 21 and the lower die 22 are used for surface pressing process for edge portions B, C (Fig. 12), on both the upper and lower surfaces along the thermally cut portion A, relative to the sheet material W having been thermally cut by the laser processing machine portion 2 (Fig. 1, Fig. 2). In the description herein, the thermally cut portion A represents a slit-like portion or interspace obtained by a metal material being removed by thermal cutting process. A width a (Fig. 12) of the thermally cut portion A is from about 0.2 mm to about 0.3 mm.

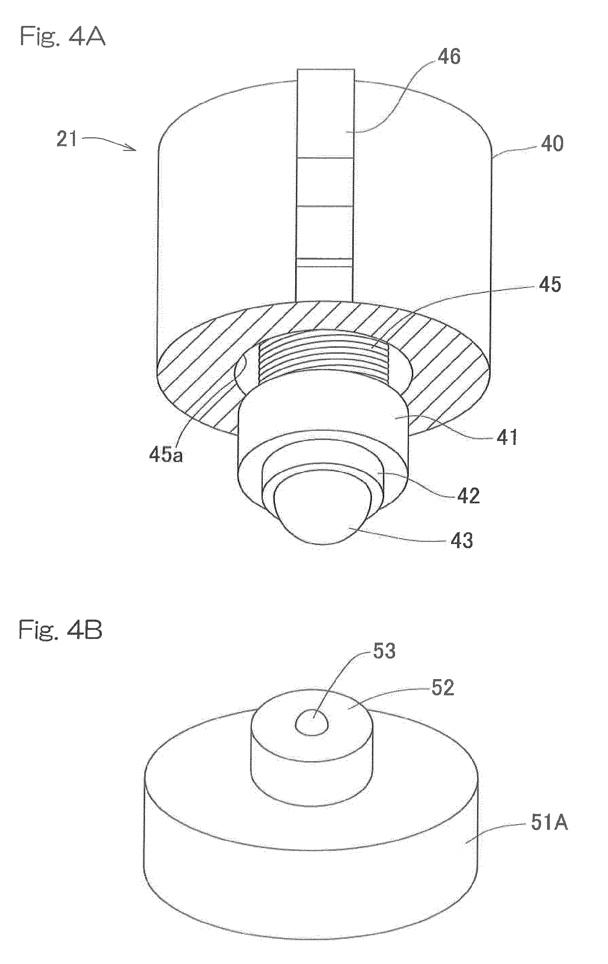

As shown in a perspective view of Fig. 4A, the upper die 21 for surface pressing includes: a cylindrical upper die body 40 provided with a guide hole 40a that is opened on the lower side; a guide member 41 that is inserted into the guide hole 40a of the upper die body 40 so as to be ascendable and descendable; a ball holding member 42 fixed to the guide member 41; and a ball 43 that is rotatably supported by the ball holding member 42 and that projects downward. The guide member 41 is prevented from dropping, by a stopper 44 (Fig. 3) disposed at the lower end of the upper die body 40, and is urged downward by a coil spring 45 inserted into the guide hole 40a.

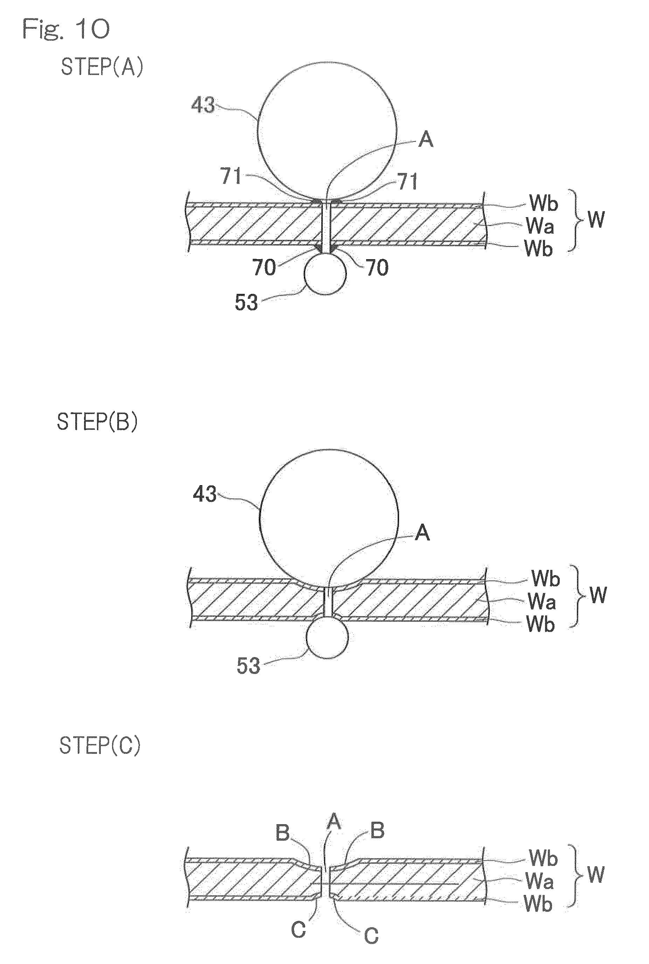

In the preferred embodiment, the ball 43 is pressed against the edge portion B (Fig. 10) of the sheet material W, as described below, by force of the coil spring 45. However, the coil spring 45 may not necessarily be provided, and also, the ball 43 may be pressed against the edge portion B of the sheet material W by controlling driving of the ascending and descending of the ram 25 (Fig. 2). Further, the ball 43 may be pressed against the edge portion B of the sheet material W by using both the coil spring 45 and the ram 25.

As shown in Fig. 3, the upper die 21 for surface pressing is fitted into a die holding hole 38 of the upper turret 15 so as to be ascendable and descendable, and a key 46 provided on an outer circumference of the upper die body 40 is engaged with a key groove 38a formed on an inner periphery of the die holding hole 38, to prevent the upper die 21 from rotating relative to the upper turret 15. The upper die 21 for surface pressing is connected, at the punching position P2 (Fig. 1, Fig. 2), to the ram 25 via a T-shaped connecting portion 40b provided at the upper end of the upper die body 40.

In Fig. 3, the lower die 22 for surface pressing includes: a lower die outer case 49 fixed to the lower turret 16 via a lower die holder 47; a lower die body 50 supported in the lower die outer case 49 so as to be ascendable and descendable; a ball holding member 52 fixed to an upper member 51A of the lower die body 50; and a ball 53 that is rotatably supported by the ball holding member 52 and that projects upward. Fig. 4B is a perspective view of the upper member 51A of the lower die body 50.

As shown in Fig. 3, the ball holding member 42 of the upper die 21 confronts the ball holding member 43 of the lower die 22, while a lower surface of the ball holding member 42 is oppose to a upper surface of the ball holding member 43. That is, the lower surface of the ball holding member 42 and the upper surface of the ball holding member 43 define opposed surfaces. The ball 43 of the upper die 21 is disposed in the opposed surface of the ball holding member 42 so as to project downwardly, and the ball 53 of the lower die 22 is disposed in the opposed surface of the ball holding member 52 so as to project upwardly, with the balls 43, 53 being opposed to each other. A diameter of each of the balls 43, 53 is sufficiently greater than the width a of the thermally cut portion A. In the preferred embodiment, the diameter of the ball 43 of the upper die 21 is about several times greater than the diameter of the ball 53 of the lower die 22. It is noted that the upper and the lower balls 43 and 53 may have the same diameter.

The ball 43 and the ball holding member 42 of the upper die 21 are implemented as a free bearing, and the ball 43 is rotatably disposed in the ball holding member 42 that serves as a case, such that the ball 43 is prevented from dropping and partially projects from the ball holding member 42. The ball 53 and the ball holding member 52 of the lower die 22 are implemented as a free bearing as described for the upper die 21. The upper and lower free bearings may have the same structure except that the diameters of the balls 43 and 53 are different from each other. Alternatively, the structures of the balls 43 and 53 may be the same including the diameter thereof. The balls 43 and 53 are implemented as, for example, steel balls.

The lower member 51B of the lower die body 50 is fitted into a guide hole 49a formed in the lower die outer case 49 so as to be ascendable and descendable. Thus, the lower die body 50 is supported so as to be ascendable and descendable relative to the lower die outer case 49. A bolt 55 that passes through a bolt insertion hole 54 formed in the lower die outer case 49 so as to be parallel to the guide hole 49a is screwed into the lower member 51B of the lower die body 50. The lower die body 50 is urged downward by a coil spring 56 disposed between a head portion 55a of the bolt 55 and a peripheral portion 54a of the bolt insertion hole 54.

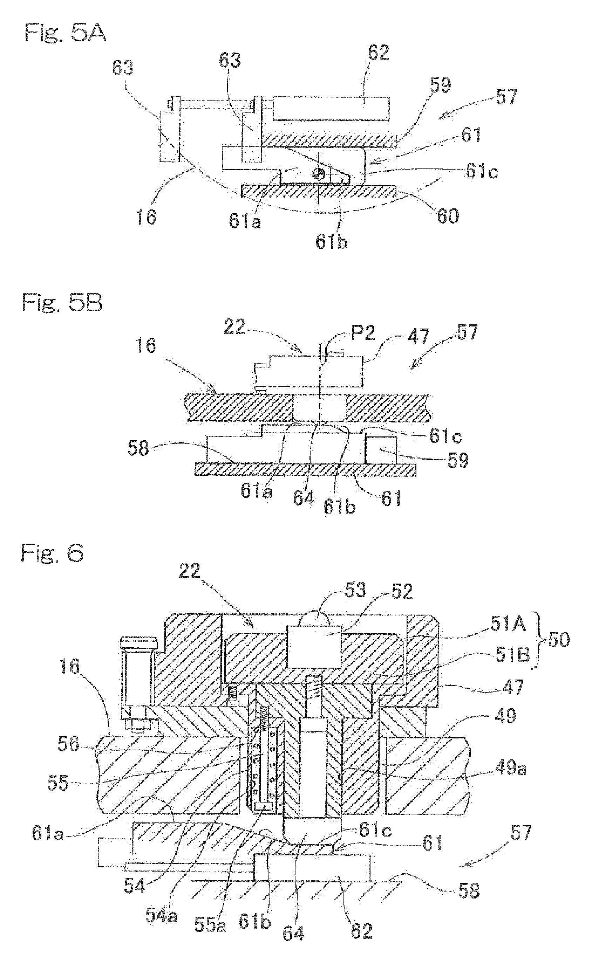

A lower die ascending and descending unit 57 is provided at a position below the lower turret 16 at the punching position P2. The lower die ascending and descending unit 57 causes the lower die 22 to ascend to a predetermined height, when the edge portions B, C on both the upper and lower surfaces along the thermally cut portion A of the sheet material W are surface-pressed or deburred by the deburring tool 20. As shown in a plan view of Fig. 5A and a front view of Fig. 5B, the lower die ascending and descending unit 57 includes: an advancing and retracting member 61 that is guided on a reaction force receiver 58 so as to advance and retract in, for example, a direction orthogonal to the radial direction of the lower turret 16 by a pair of guide members 59 and 60; and an actuator 62 that drives the advancing and retracting member 61.

The upper surface of the advancing and retracting member 61 includes: an upper-side plane portion 61a and a lower-side plane portion 61c; and a tilted surface portion 61b that is tilted downward from the upper-side plane portion 61 a to the lower-side plane portion 61c. The actuator 62 is implemented as a fluid cylinder, and the front end of a piston rod of the actuator 62 is connected to the rear end of the advancing and retracting member 61 by means of a connecting member 63. A cam follower 64 disposed at the lower end of the lower member 51B of the lower die body 50 slidably contacts with the upper surface of the advancing and retracting member 61.

By the actuator 62 driving the advancing and retracting member 61 so as to advance and retract, as shown in Fig. 3, in a state where the cam follower 64 is received on the upper-side plane portion 61a of the advancing and retracting member 61, the lower die 22 is lifted to a predetermined height at which the surface pressing is performed. On the other hand, as shown in Fig. 6, in a state where the cam follower 64 is received on the lower-side plane portion 61 c of the advancing and retracting member 61, the lower die 22 descends. Thus, when the lower die 22 is positioned distant from the punching position P2 by rotation of the lower turret 16, the ball 53 of the lower die 22 is prevented from slidably contacting with the lower surface of the sheet material W.

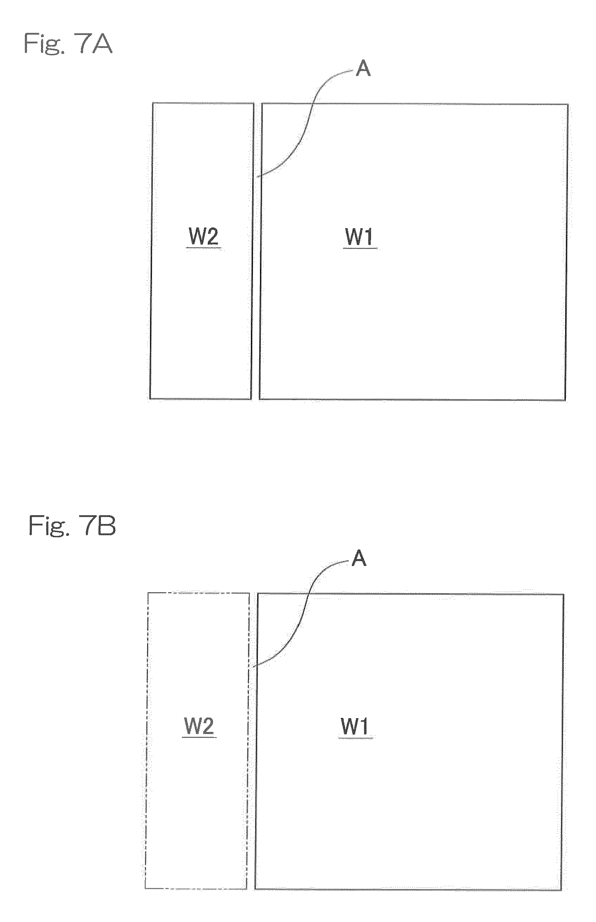

According to the laser processing machine 1 of the preferred embodiment, in a case where the sheet material W is thermally cut by the laser processing machine portion 2, the deburring tool 20 is used to perform surface pressing process along the thermally cut portion A. The surface pressing process may be performed for each thermally cut portion A, immediately after the thermal cutting process, prior to, for example, shift to the following thermally cutting portion A. Alternatively, the surface pressing process may be performed collectively for the thermally cut portions A when all the thermal cutting process has been completed. Further, the surface pressing process may be performed in a state where sheet material portions, such as a product sheet material W1 and an unprocessed sheet material W2 to be discarded, are positioned on both sides lateral to the thermally cut portion A, as shown in Fig. 7A. The surface pressing process may be also performed in a state where a sheet material portion, such as the product sheet material W1 separated from the unprocessed sheet material W2, is positioned on only one side lateral to the thermally cut portion A, as shown in Fig. 7B.

The above surface pressing process is performed as follows. In the description herein, the surface pressing process in the case of the sheet material portions being positioned on both sides lateral to the thermally cut portion A, will be described.

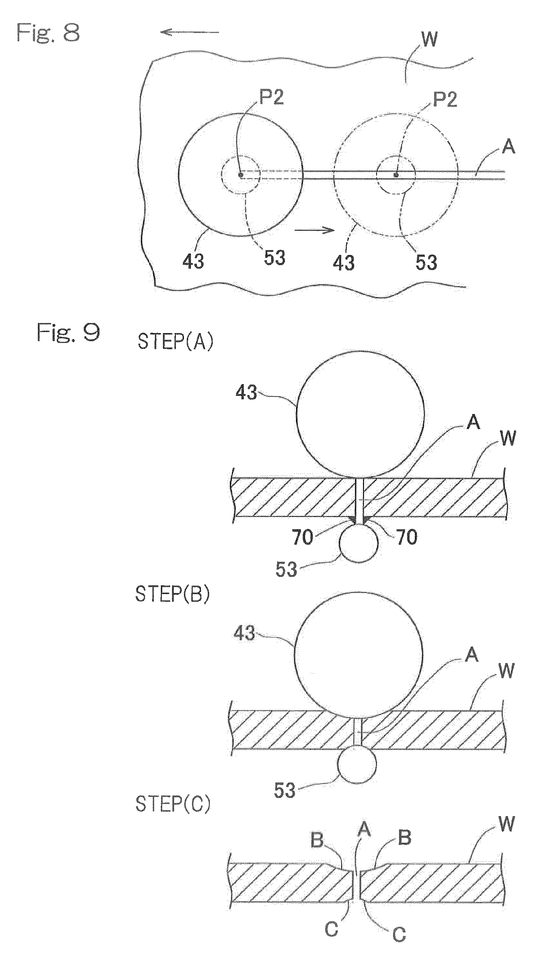

Initially, the upper and lower turrets 15 and 16 are driven to rotate, and the upper and lower dies 21 and 22 of the deburring tool 20 are indexed to the punching position P2. The sheet material W held by the workpiece holder 33 of the sheet material moving mechanism 4 is moved such that one end portion of the thermally cut portion A conforms with the punching position P2 as indicated by a solid line in Fig. 8.

Subsequently, the upper die 21 is caused to descend to a predetermined height by driving of the ram 25 and the lower die 22 is caused to ascend to a predetermined height by the lower die ascending and descending means 57, to hold the sheet material W from the upper and lower sides by the paired upper and lower balls 43 and 53, as shown in step (A) and step (B) of in Fig. 9. In step (A) of in Fig. 9, the upper die 21 is in the course of descending and the lower die 22 is in the course of ascending. At this time, the upper die 21 and the lower die 22 contact with the upper and lower surfaces, respectively, of the sheet material W. In step (B) of in Fig. 9, the upper die 21 has descended to the predetermined height, and the lower die 22 has ascended to the predetermined height. In this final state, the lower end of the upper ball 43 presses the sheet material W from the upper surface thereof slightly toward the center, of the plate, in thickness, and the upper end of the lower ball 53 presses the sheet material W from the lower surface thereof slightly toward the center, of the plate, in thickness.

In this state, as indicated by a double dotted line in Fig. 8, the sheet material W is moved by the sheet material moving mechanism 4 such that the balls 43 and 53 are moved relative thereto along the thermally cut portion A. Thus, the edge portions B and C on both the upper and lower surfaces along the thermally cut portion A are held from the upper side and the lower side by the paired upper and lower balls 43 and 53 to perform surface pressing. By this surface pressing, the burr-like protrusion 70 of the lower surface edge portion C is squashed and removed by the lower ball 53. The "removed" described herein indicates that a portion, of the burr-like protrusion 70, protruding from the lower surface of the sheet material W is eliminated or at least reduced by the squashing operation.

Further, in the surface pressing process of the preferred embodiment, the upper and lower balls 43 and 53 are pressed against the sheet material W, whereby the upper surface edge portion B is plastically deformed, by the upper ball 43, into a shape that is recessed from the upper surface, and the lower surface edge portion C is plastically deformed, by the lower ball 53, into a shape that is recessed from the lower surface, as shown in step (C) of in Fig. 9. By such plastic deformation, edges of the upper surface edge portion B and the lower surface edge portion C are removed, and are made smooth, which can be felt by fingers.

In the above surface pressing process operation, since the upper ball 43 is urged downward by the coil spring 45 (Fig. 3), the surface pressing can be uniformly performed along the thermally cut portion A without influence of variation in thickness of the sheet material W. The upper ball 43 and the lower ball 53 are rotatably supported by the respective upper and lower ball holding members 42 and 52 (Fig. 3), and freely rotate in any direction by the sheet material W being moved. Therefore, the sheet material W can be smoothly moved. Accordingly, the surface pressing process can be sequentially performed with high efficiency.

Fig. 10 is a cross-sectional view illustrating the surface pressing process operation performed when the sheet material W is a coated or plated steel sheet, such as a zinc-plated steel sheet, in which a surface of a steel Wa is plated with a metal Wb having a melting point lower than the steel Wa. Even in the case that the sheet material W is a plated steel sheet, the surface pressing process operation is performed in the same manner as described above (steps (A) to (C) of Fig. 10). In this case, the burr-like protrusion 70 generated in the lower surface edge portion C of the sheet material W is squashed and removed by the lower ball 53, and a small projection 71 generated in the upper surface edge portion B of the sheet material W is also squashed and removed by the upper ball 43. Further, the upper surface edge portion B and the lower surface edge portion C are plastically deformed into recessed shapes by the respective upper and lower balls 43 and 53 in the same manner as described above, whereby the upper surface edge portion B and the lower surface edge portion C are made smooth, which can be felt by fingers.

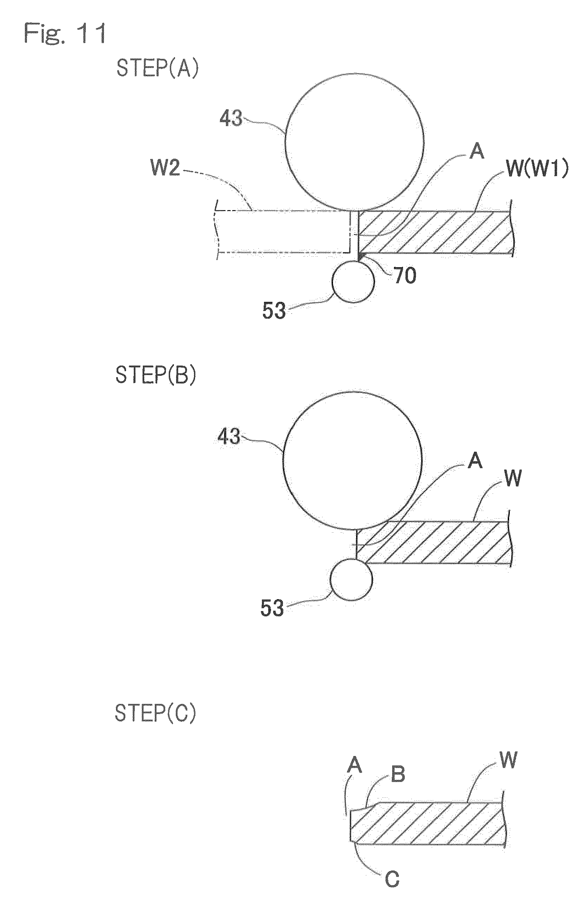

Fig. 11 illustrates the surface pressing process performed when a sheet material portion, such as the product sheet material W1 separated from the unprocessed sheet material W2, is positioned on only one side lateral to the thermally cut portion A. Even in this case, a series of the surface pressing process operation is performed as described for the case where sheet material portions are positioned on both sides lateral to the thermally cut portion A (steps (A) to (C) of Fig. 11). Thus, the same effect as obtained in the case of the sheet material portions being positioned on both sides lateral to the thermally cut portion A, can be obtained.

Although the present invention has been fully described in connection with the preferred embodiments thereof with reference to the accompanying drawings, those skilled in the art will readily conceive numerous changes and modifications within the framework of obviousness upon the reading of the specification herein presented of the present invention. For example, although the laser processing machine 1 is implemented as a laser punch combination machine in the above preferred embodiment, the punch press mechanism portion 3 may not be provided. In this case, the ascending and descending mechanism (not shown) configured to ascend and descend the upper die 21 and the lower die 22 of the deburring tool 20 needs to be separately provided. Accordingly, such changes and modifications are, unless they depart from the scope of the present invention as delivered from the claims annexed hereto, to be construed as included therein.

### Reference Numerals

- 1: laser processing machine
- 4: sheet material moving mechanism
- 11: laser head
- 20: deburring tool
- 42: ball holding member for upper die
- 43: ball for upper die
- 52: ball holding member for lower die
- 53: ball for lower die
- 70: protrusion
- 71: projection
- A: thermally cut portion
- B: upper surface edge portion
- C: lower surface edge portion
- W: workpiece
- Wa: steel
- Wb: plated layer

## Claims

1. A deburring tool for use in a laser processing machine that comprises:
a laser head configured to irradiate a sheet material with a laser beam downward; and a sheet material moving mechanism configured to move, below the laser head, the sheet material in a front, rear, left, and right directions relative to the laser head, thereby to perform thermal cutting process for the sheet material by irradiating the sheet material, moved by the sheet material moving mechanism, with the laser beam, the deburring tool comprising:
upper and lower ball holding members disposed so as to oppose each other; and
upper and lower balls rotatably supported by the respective upper and lower ball holding members, the upper and lower balls projecting so as to confront opposing surfaces of the respective lower and upper ball holding members, wherein
in a state where a thermally cut portion of the sheet material is held between the upper ball and the lower ball, the sheet material is moved along the thermally cut portion by the sheet material moving mechanism, and a lower surface edge portion along the thermally cut portion of the sheet material is pressed upward by the lower ball.

2. The deburring tool for use in the laser processing machine as claimed in claim 1, wherein, in a state where the sheet material is held between the upper ball and the lower ball, the sheet material is moved by the sheet material moving mechanism, and an upper surface edge portion along the thermally cut portion of the sheet material is pressed downward by the upper ball.

3. A laser processing machine comprising the deburring tool as claimed in claim 1 or 2.

4. A deburring method for performing, by using the deburring tool as claimed in claim 2, a deburring press process for a thermally cut portion of a material that is a plated steel sheet in which a surface of a steel is plated with a metal having a melting point lower than the steel, wherein
in a state where the thermally cut portion of the sheet material is held between the upper ball and the lower ball, by moving the sheet material along the thermally cut portion by the sheet material moving mechanism, a lower surface edge portion along the thermally cut portion of the sheet material is pressed upward by the lower ball, and an upper surface edge portion along the thermally cut portion of the sheet material is pressed downward by the upper ball.
